# EUROPÄISCHE PATENTSCHRIFT

(11) **EP 2 910 834 B1**
(45) Veröffentlichungstag und Bekanntmachung des Hinweises auf die Patenterteilung: **17.10.2018**
(21) Anmeldenummer: 14199758.5
(22) Anmeldetag: 22.12.2014
(51) Int. Cl.: F16L 53/38, F01N 3/20, F24H 1/10, H05B 3/04, H05B 3/06

(54) **Beheizbare Fluidleitung und Verbinder für eine beheizbare Fluidleitung**
Connector for a heatable fluid conduit and heatable fluid conduit
Conduite de fluide pouvant être chauffée et connecteur pour une conduite de fluide pouvant être chauffée

(30) Priorität: 24.02.2014 DE 102014102353
(43) Veröffentlichungstag der Anmeldung: 26.08.2015
(73) Patentinhaber: NORMA Germany GmbH, 63477 Maintal (DE)
(72) Erfinder: Mann, Stephan, 63599 Biebergemünd (DE)
(74) Vertreter: Patentanwälte Olbricht Buchhold Keulertz

(56) Entgegenhaltungen:
- EP-A2- 0 068 688
- EP-A2- 1 070 642
- WO-A1-2008/023021
- DE-A1- 19 754 163
- DE-A1-102011 102 244
- US-A- 5 859 953

## Beschreibung

Die vorliegende Erfindung betrifft die Erfindung einen Verbinder für eine beheizbar Fluidleitung mit einem eine Längsachse aufweisenden Eintrittskanal, einem unter einem vorbestimmten Winkel zur Längsachse verlaufenden seitlichen Austrittskanal und einem Aufnahmeraum für eine Dichtung, der sich an den Austrittskanal anschließt und eine Umfangswand mit einer Mittelachse aufweist, wobei eine Dichtung im Aufnahmeraum positionierbar ist.
Ferner betrifft eine beheizbare Fluidleitung mit einem Rohr, einem Verbinder, der an einem Ende des Rohres angeordnet ist und einen Eintrittskanal mit einer Längsachse aufweist, und einem Heizstab, der im Inneren des Rohres angeordnet ist und durch einen Austrittskanal unter einem vorbestimmten Winkel zur Längsachse seitlich aus dem Verbinder herausragt, wobei in einem eine Umfangswand aufweisenden Aufnahmeraum zwischen dem Heizstab und dem Verbinder eine Dichtung angeordnet ist, wobei Mittel vorgesehen sind, die den Heizstab und die Dichtung relativ zueinander zentrieren. Eine beheizbare Fluidleitung und ein Verbinder für eine derartige beheizbare Fluidleitung sind aus DE 10 2011 102 244 A1 bekannt.
Die Erfindung wird im Folgenden anhand einer Fluidleitung erläutert, die verwendet wird, um Harnstoff von einem Vorratsbehälter zu einer Verbrauchsstelle zu transportieren. Harnstoff (UREA) wird beispielsweise bei Dieselmotoren verwendet, um die Emission von Stickoxiden zu verringern.

Wenn eine derartige Fluidleitung in einem Kraftfahrzeug eingebaut ist dann besteht bei niedrigen Außentemperaturen die Gefahr, dass der Harnstoff in der Fluidleitung einfriert, so dass er nicht mehr fließfähig ist. Es ist daher bekannt, die Fluidleitung und den Verbinder zu beheizen.

Wenn der Verbinder einen geradlinig verlaufenden Eintrittskanal aufweist, sich also der Eintrittskanal ohne Richtungsänderung in den Austrittskanal fortsetzt, dann muss der Heizstab seitlich aus dem Verbinder herausgeführt werden. Üblich sind hier Winkel von 20° bis 80° zur Längsachse. Der Heizstab muss am Austritt aus dem Verbinder abgedichtet werden, um ein Austreten des beheizten Fluides zu verhindern. Für die Abdichtung verwendet man eine Dichtung, die in einem Aufnahmeraum angeordnet ist, der sich an den Austrittskanal anschließt. Diese Dichtung, die beispielsweise als Rundschnurdichtung oder O-Ring ausgebildet sein kann, legt sich dicht an den Heizstab und dicht an die Umfangswand an, so dass ein Austritt von Fluid aus dem Verbinder durch den Austrittskanal nicht möglich sein sollte.

Es hat sich allerdings gezeigt, dass diese Dichtungsfunktion nicht immer mit der notwendigen Zuverlässigkeit erfüllt wird.

EP 1 070 642 A2 zeigt eine Heizvorrichtung für eine Scheibenwaschanlage von Fahrzeugen, wobei ein elektrischer Heizleiter durch ein Anschlusselement geführt wird und mit einer Dichtung sowie einem Abdeckelement nach außen abgedichtet und im Anschlusselement gehalten wird.

WO 2008/023021 A1 zeigt eine Urea-Leitung mit einer Heizeinrichtung. Diese Heizeinrichtung, in Form eines Schlaufendrahtes, ist im Inneren der Leitung angeordnet und durch eine Dichtung elektrisch nach außen verbunden.

EP 00 68 688 A2 beschreibt eine Kraftstoffleitung mit einer Heizanordnung. Mittels einer Dichtung uns einer Isolationskonstruktion wird die Leitung fluiddicht gehalten, sowie Anschlüsse und elektrische Bauteile vom Heizelement abgeschirmt.
Der Erfindung liegt die Aufgabe zugrunde, einen seitlich aus dem Verbinder heraus geführten Heizstab zuverlässig abzudichten.

Die Aufgabe wird bei einem Verbinder der eingangs genannten Art dadurch gelöst, dass die Mittelachse der Umfangswand gegenüber der Mittelachse des Austrittskanals versetzt ist.

Mit einer derartigen Ausgestaltung kann man das Problem, dass der Heizstab aufgrund seiner Eigensteifigkeit nicht von sich aus nicht konzentrisch im Austrittskanal liegt, sozusagen vorkompensieren. Damit lässt sich eine verbesserte Dichtigkeit an der Stelle er reichen, wo der Heizstab aus dem Verbinder austritt.
Vorzugsweise ist die Mittelachse der Umfangswand gegenüber der Umfangswand des Austrittskanals zur Längsachse hin versetzt. Damit spart man sich ein Vorbiegen des Heizstabs. Bevorzugterweise ist die Mittelachse der Umfangswand gegenüber der Umfangswand gegenüber der Mittelachse des Austrittskanals um maximal 0,5 mm versetzt. Dieser kleine Versatz reicht aus, um die Probleme mit der Exzentrizität des Heizstabs im Austrittskanal zu beseitigen.
Die Aufgabe wird zudem bei einer beheizbaren Fluidleitung mit einem Verbinder der eingangs genannten Art dadurch gelöst, dass die Umfangswand eine Mittelachse aufweist, die gegenüber einer Mittelachse des Austrittskanals seitlich versetzt ist.

Man führt die Probleme mit der Abdichtung darauf zurück, dass der Heizstab, der etwa parallel zur Längsachse in den Eintrittskanal des Verbinders eintritt und dann unter dem vorbestimmten Winkel zur Längsachse durch den Austrittskanal austritt, nicht ohne weiteres zentrisch im Austrittskanal angeordnet ist. Der Austrittskanal muss, damit der Heizstab überhaupt montiert werden kann, einen Querschnitt aufweisen, der etwas größer ist als der Querschnitt des Heizstabs. Wenn der Heizstab nicht mehr zentrisch in dem Austrittskanal angeordnet ist, dann wird ein Umfangsabschnitt der Dichtung verstärkt mit Druck beaufschlagt und sozusagen überpresst während ein anderer Umfangsabschnitt mit einem zu geringem Druck beaufschlagt wird, so dass ins gesamt die Dichtigkeit nicht mit der notwendigen Zuverlässigkeit gewährleistet werden kann. Wenn man nun Mittel vorsieht, diesen Heizstab und die Dichtung relativ zueinander zu zentrieren, dann wird das Problem der Dichtigkeit auf einfache Weise gelöst. Alle Umfangsabschnitte der Dichtung werden dann auf gleiche Weise komprimiert, so dass an keinem Umfangsabschnitt Über oder Unterpressungen auftreten.

Der Aufnahmeraum und der Austrittskanal sind dann nicht mehr koaxial angeordnet. Damit kann man die tatsächliche Lage des Heizstabs im Austrittskanal berücksichtigen.
Hierbei ist bevorzugt, dass die Mittelachse der Umfangswand gegenüber der Mittelachse des Austrittskanals zur Längsachse hin versetzt ist. Damit berücksichtigt man die Eigenspannung des Heizstabs, die er nach dem Umlenken aus dem Eintrittskanal in den Austrittskanal hat. Man kann darauf verzichten, den Heizstab vor zu biegen.
Vorzugsweise ist die Mittelachse der Umfangswand gegenüber der Mittelachse des Austrittskanals um weniger als 0,5 mm versetzt. Der Versatz kann also relativ klein sein. Er kann beispielsweise 2, 3, 4 oder 5 Zehntel Millimeter oder Zwischenwerte davon betragen. Alternativ oder zusätzliche zur exzentrischen Anordnung von Umfangswand des Aufnahmeraums und Austrittskanal kann auch vorgesehen sein, dass im Aufnahmeraum eine Stützscheibe angeordnet ist, die sich an der Umfangswand abstützt und den Heizstab relativ zur Dichtung positioniert. Diese Stützscheibe kann sich gegen die durch die Biegung des Heizstabs hervorgerufene Spannung an der Umfangswand abstützen und so mit den Heizstab relativ zur Dichtung positionieren.
Bevorzugterweise ist im Eintrittskanal ein Rampenelement angeordnet, das eine aus dem Eintrittskanal zum Austrittskanal weisende Führungsfläche aufweist. Man kann den Heizstab dann durch den Eintrittskanal in den Verbinder einführen. Der Heizstab trifft dann auf die Führungsfläche des Rampenelements und wird dadurch zum Austrittskanal abgelenkt. Er tritt dann aus dem Austrittskanal und dem Aufnahmeraum für die Dichtung aus. Dabei ist es praktisch nicht zu vermeiden, dass der Heiz stab aufgrund einer gewissen Eigensteifigkeit beim Durchtritt durch den Aufnahmeraum nicht mehr zentrisch zur Dichtung ist. Dieses Problem, das ansonsten das Risiko einer Undichtigkeit hervorrufen würde, wird durch die Mittel, also die Exzentrizität von Umfangswand und Austrittskanal und/oder die Stützscheibe behoben.
Die Erfindung wird im Folgenden anhand eines bevorzugten Ausführungsbeispiels in Verbindung mit der Zeichnung beschrieben. Hierin zeigen:
- Fig. 1: einen schematischen Längsschnitt durch ein Ende einer beheizbaren Leitung,
- Fig. 2: einen Schnitt II-II nach Fig. 1,
- Fig. 3: eine schematische Draufsicht auf den Austrittskanal,
- Fig. 4: eine vergrößerte Teilansicht aus Fig. 1 und
- Fig. 5: eine abgewandelte Ausführungsform zu Fig. 4.

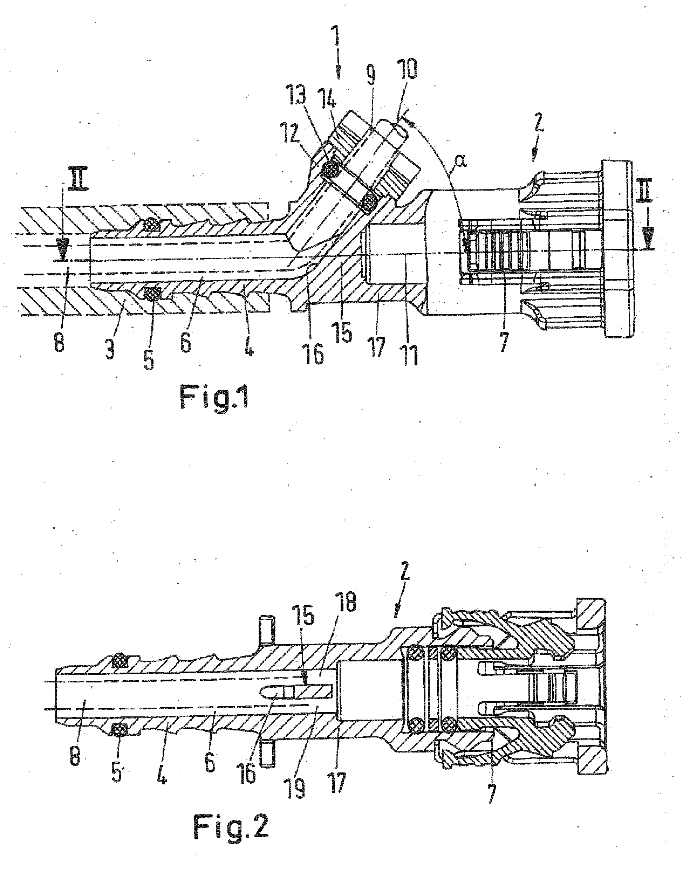

Fig. 1 zeigt eine beheizbare Fluidleitung 1 mit einem Verbinder 2 und einem Rohr 3. Das Rohr ist flexibel. Es kann aus einem extrudierten Kunststoff oder auch aus einem Schlauchmaterial gebildet sein. Auch ein Schlauch soll im Folgenden unter den Begriff "Rohr" fallen.
Das Rohr 3 ist auf einen Anschlussstutzen 4 des Verbinders aufgesteckt und dort mit einem O-Ring abgedichtet. Der Anschlussstutzen 4 weist auf seiner Außenseite ein Tannenbaumprofil auf. Falls erforderlich, kann das Rohr 3 auf dem Anschlussstutzen 4 auch mit Hilfe einer Kunststoffumspritzung festgehalten werden.

Durch den Anschlussstutzen 4 ist ein Eintrittskanal 6 geführt, der durch den gesamten Verbinder hin durch geradlinig verläuft und, wie dies in Fig. 2 zu erkennen ist, bis zu einer Anschlussgeometrie 7 geführt ist. Mit der Anschlussgeometrie 7 kann der Verbinder 2 an einem Verbindungsstutzen einer anderen Leitung, eines Tanks oder eines Aggregats befestigt werden. Die genaue Form der Anschlussgeometrie 7 spielt im vorliegenden Fall keine Rolle. Sie sollte aber so ausgebildet sein, dass eine Verbindung zwischen dem Verbinder 2 und einem Verbindungsstutzen eine ausreichende Festigkeit und Dichtigkeit aufweist.

Im freien Querschnitt des Rohres 3 ist ein gestrichelt dargestellter Heizstab 8 als Heizmittel angeordnet. Der Heizstab 8 weist mindestens einen Heizleiter auf, der in ein extrudiertes Kunststoffmaterial eingebettet ist. Vorzugsweise sind zwei Heizleiter vorgesehen, die an einem vom Verbinder 2 entfernten Ende miteinander verbunden sind, so dass eine elektrische Versorgung nur an einem Ende des Heizstabs 8 notwendig ist. Der Heiz stab 8 ist zwar flexibel und biegbar. Er weist aber eine gewisse Eigensteifigkeit auf, so dass der Heizstab 8 dann, wenn das Rohr 3 (mit darin befindlichem Heizstab 8) auf den Anschlussstutzen 4 aufgeschoben wird, der Heizstab 8 in den Eintrittskanal 6 im Anschlussstutzen 4 eingeschoben werden kann.

Der Heizstab 8 sollte den Verbinder 2 verlassen, bevor er die Anschlussgeometrie 7 erreicht, um eine mithilfe der Anschlussgeometrie 7 hergestellte Verbindung nicht zu stören. Dementsprechend weist der Verbinder einen Austrittskanal 9 auf, dessen Längsachse 10 unter einem Winkel α zur Längsachse 11 des Eintrittskanals 6 liegt. Der Winkel α ist größer als 0° und liegt vorzugsweise im Bereich von 20° bis 80°.

Der Austrittskanal 9 ist in einem Stutzen 12 angeordnet, der unter dem Winkel □ zur Längsachse 11 des Eintrittskanals 6 gerichtet ist. Ein O-Ring 13 ist im Stutzen 12 vorgesehen. Der O-Ring 13 liegt dichtend am Heizstab 8 an und verhindert einen Austritt von Fluid aus dem Austrittskanal. Der O-Ring 13 wird mithilfe eines Stopfens 14 im Austrittskanal 9 festgehalten, der im Stutzen 12 angeordnet ist. Der Stopfen 14 hält den O-Ring allerdings nur am Platz. Er verpresst ihn also nicht.
Das Rampenelement 15 weist eine Führungsfläche 16 auf, die gekrümmt ist, also knickfrei ausgebildet ist. Die Führungsfläche 16 erstreckt sich von der "Unterseite" des Eintrittskanals 6, also der Seite, die dem Austrittskanal 9 gegenüberliegt, bis zum Austrittskanal 9 und setzt sich in einer Wand des Austrittskanals 9 fort. Die Spitze des Heizstabs 8 kann also auf der Führungsfläche 16 entlang gleiten, ohne durch Stufen, Knicke, Rillen oder dergleichen behindert zu werden. Wenn man den Heiz stab 8 durch den Anschlussstutzen 4 in den Eintrittskanal 6 einführt, dann wird die Spitze durch die Führungsfläche 16 des Rampenelements 15 so umgelenkt, dass sie automatisch in den Austrittskanal 9 gelangt.

Die Fertigung einer beheizbaren Fluidleitung 1 mit einem derartigen Verbinder 2 gestaltet sich relativ einfach. Man muss lediglich das Rohr 3 mit dem Heizstab 8 vorkonfektionieren, so dass der Heizstab 8 mit einer vorbestimmten Länge aus dem Rohr 3 herausragt. Bevor man also das Rohr 3 auf den Anschlussstutzen 4 aufschiebt, gelangt der Heizstab 8 bereits in den Eintrittskanal 6 im Innern des Anschlussstutzens 4. Wenn dann das Rohr 3 und der Heizstab 8 gemeinsam weiterbewegt werden, um das Rohr 3 auf den Anschlussstutzen 4 aufzuschieben, dann wird die Spitze des Heizstabs 8 durch die Führungsfläche 16 am Rampenelement 15 umgelenkt, so dass diese Spitze in den Austrittskanal 9 gelangt und dort aus dem Verbinder 2 austreten kann.

Natürlich ist es auch möglich, zunächst der Heizstab 8 alleine in den Verbinder 2 einzusetzen und dann das Rohr 3 über den Heizstab 8 zu führen und auf den Anschlussstutzen 4 aufzuschieben.

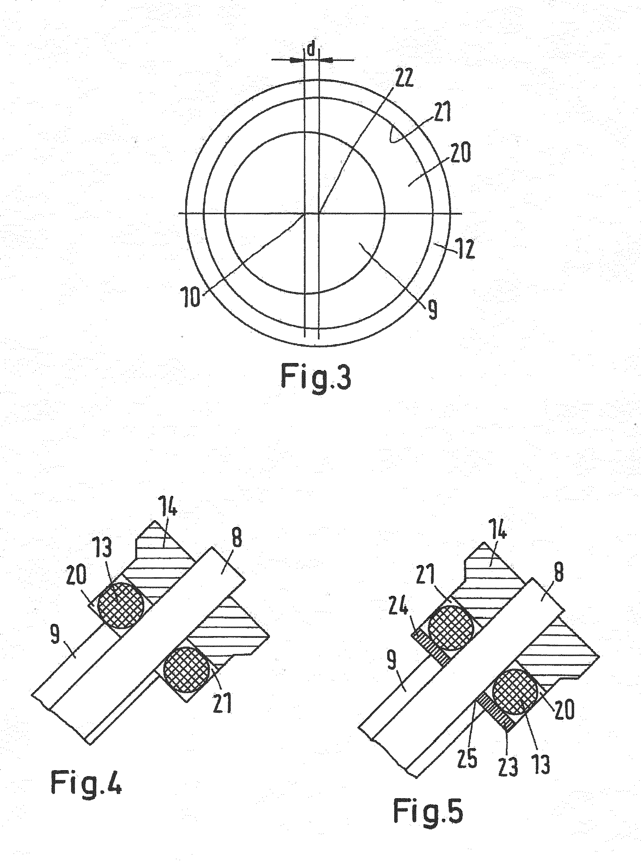

Zur Aufnahme des O-Rings 13, also der Dichtung, ist ein Aufnahmeraum 20 vorgesehen, der eine Umfangswand 21 aufweist. Der O-Ring 13, also die Dichtung, sollte unter einer vorbestimmten Vorspannung radial innen am Heizstab 8 und radial außen an der Umfangswand 21 anliegen. Dabei sollte die Spannung in Umfangsrichtung etwa gleichförmig verlaufen.
Der Heizstab 8 liegt allerdings in der Regel nicht zentrisch im Ausgangskanal 9. Der Heizstab 8 weist eine gewisse Eigensteifigkeit auf. Diese Eigensteifigkeit lässt zwar ein Verbiegen des Heizstabes zu, wenn er über die Führungsfläche 16 des Rampenelements 15 in den Austrittskanal 9 geschoben wird. Aufgrund der Eigensteifigkeit versucht der Heizstab 8 aber seine gestreckte Lage beizubehalten. Dies führt dazu, dass der Heizstab 8 nicht mehr konzentrisch im Austrittskanal 9 liegt, sondern sich stärker zur Längsachse 11 des Eingangskanals 11 neigt. Ohne zusätzliche Maßnahmen führt dies dazu, dass ein Umfangsbereich des O-Rings 13 stärker komprimiert wird, während ein dazu diametral gegenüberliegender Bereich des O-Rings 13 weniger stark komprimiert wird. Diese Über- und Unterpressung des O-Rings 13 hat das Risiko einer Undichtigkeit zur Folge.
Um dieses Risiko zu vermeiden, wird die Exzentrizität des Heizstabs 8 im Austrittskanal 9 sozusagen vorkompensiert. Eine Möglichkeit hierzu besteht darin, das man, wie in den Fig. 3 und 4 dargestellt, den Austrittskanal 9 und den Aufnahmeraum 20 exzentrisch zu einander anordnet. Mit anderen Worten weist die Umfangswand 21 eine Mittelachse 22 auf, die gegenüber der Mittelachse 10 des Austrittskanals 9 seitlich versetzt ist und zwar zur Längsachse 11 hin. Wie aus Fig. 4 zu erkennen ist, erreicht man dadurch, dass der O-Ring 13 so im Aufnahmeraum 20 angeordnet ist, dass er vom Heizstab 8 in allen Umfangsabschnitten etwa gleichförmig beaufschlagt wird.
Die beiden Mittelachsen 10, 22 weisen einen Versatz d auf, der in Fig. 3 und 4 übertrieben groß dargestellt ist. In vielen Fällen reicht es aus, wenn die Mittelachse 22 der Umfangswand gegenüber der Mittelachse 10 des Austrittskanals 9 um maximal 0,5 mm, beispielsweise um 0,3 mm, versetzt ist.

Eine weitere Möglichkeit, die zusätzlich dazu verwendet werden kann, besteht darin, eine Stützscheibe 23 im Aufnahmeraum 20 anzuordnen. Die se Stützscheibe kann dann so dimensioniert werden, dass sie einerseits mit einem kleinen Spiel in den Aufnahmeraum 20 eingesetzt werden kann, andererseits aber eine Position des Heizstabes 8 sicherstellt, bei der der O-Ring 13 über seinen gesamten Umfang einer gleichmäßigen Pressung ausgesetzt ist. Im Grunde reicht es hierzu aus, wenn die Stützscheibe 23 sich an den Bereich der Umfangswand 21 abstützen kann, dem der Heizstab 8 am nächsten benachbart ist oder ohne weitere Maßnahmen sein würde. Bezogen auf Fig. 5 ist dies die rechte Seite der Umfangswand 21. Auf der gegenüberliegenden Seite der Umfangswand 21 kann hingegen ein Spiel 24 zwischen der Stützscheibe 23 und der Umfangswand 21 vorhanden sein. Aufgrund dieses Spiels 24 kann es von Vorteil sein, wenn auch bei dieser Ausgestaltung der Aufnahmeraum 20 und der Austrittskanal 9 exzentrisch zueinander angeordnet sind. Alter nativ dazu kann man auch eine Öffnung 25 in der Stützscheibe 23 durch die der Heizstab 8 geführt ist, exzentrisch anordnen.

## Patentansprüche

1. Verbinder (2) für eine beheizbare Fluidleitung (1) mit einem eine Längsachse (11) aufweisenden Eintrittskanal (6), einem unter einem vorbestimmten Winkel (α) zur Längsachse (11) verlaufenden seitlichen Austrittskanal (9) und einem Aufnahmeraum (20) für eine Dichtung (13), der sich an den Austrittskanal (9) anschließt und eine Umfangswand (21) mit einer Mittelachse (22) aufweist, wobei eine Dichtung (13) im Aufnahmeraum (20) positioniert ist, **dadurch gekennzeichnet, dass** die Mittelachse (22) der Umfangswand (21) gegenüber der Mittelachse (10) des Austrittskanals (9) versetzt ist.

2. Verbinder nach Anspruch 1, **dadurch gekennzeichnet, dass** die Mittelachse (22) der Umfangswand (21) gegenüber der Mittelachse (10) des Austrittskanals (9) zur Längsachse (11) hin versetzt ist.

3. Verbinder nach Anspruch 1 oder 2, **dadurch gekennzeichnet, dass** die Mittelachse (22) der Umfangswand (21) gegenüber der Mittelachse (10) des Austrittskanals (9) um maximal 0,5 mm versetzt ist.

4. Beheizbare Fluidleitung (1) mit einem Rohr (3), einem Verbinder (2) nach einem der Ansprüche 1 bis 3, der an einem Ende des Rohres (3) angeordnet ist und einen Eintrittskanal (6) mit einer Längsachse (11) aufweist, und einem Heizstab (8), der im Inneren des Rohres (3) angeordnet ist und durch einen Austrittskanal (9) unter einem vorbestimmten Winkel (α) zur Längsachse (11) seitlich aus dem Verbinder (2) herausragt, wobei in einem eine Umfangswand (21) aufweisenden Aufnahmeraum (20) zwischen dem Heizstab (8)und dem Verbinder (2) eine Dichtung (13) angeordnet ist, wobei Mittel vorgesehen sind, die den Heizstab (8) und die Dichtung (13) relativ zueinander zentrieren, **dadurch gekennzeichnet, dass** die Umfangswand (21) eine Mittelachse (22) aufweist, die gegenüber einer Mittelachse (10) des Austrittskanals (9) seitlich versetzt ist.

5. Fluidleitung nach Anspruch 4, **dadurch gekennzeichnet, dass** die Mittelachse (22) der Umfangswand (21) gegenüber der Mittelachse (10) des Austrittskanals (9) zur Längsachse (11) hin versetzt ist.

6. Fluidleitung nach Anspruch 4 oder 5, **dadurch gekennzeichnet, dass** die Mittelachse (22) der Umfangswand (21) gegenüber der Mittelachse (10) des Austrittskanals (9) um maximal 0,5 mm versetzt ist.

7. Fluidleitung nach einem der Ansprüche 4 bis 6, **dadurch gekennzeichnet, dass** im Aufnahmeraum (20) eine Stützscheibe (23) angeordnet ist, die sich an der Umfangswand (21) abstützt und den Heizstab (8) relativ zur Dichtung (13) positioniert.

8. Fluidleitung nach einem der Ansprüche 4 bis 7, **dadurch gekennzeichnet, dass** im Eintrittskanal (6) ein Rampenelement (15) angeordnet ist, das eine aus dem Eintrittskanal (6) zum Austrittskanal (9) weisende Führungsfläche (16) aufweist.

## Claims

1. Connector (2) for a heatable fluid line (1) having an inlet channel (6) which has a longitudinal axis (11), a lateral outlet channel (9) which extends at a predetermined angle (α) with respect to the longitudinal axis (11) and a receiving space (20) for a seal (13) which adjoins the outlet channel (9) and a peripheral wall (21) and which has a centre axis (22), wherein a seal (13) is positioned in the receiving space (20), **characterised in that** the centre axis (22) of the peripheral wall (21) is offset with respect to the centre axis (10) of the outlet channel (9).

2. Connector according to claim 1, **characterised in that** the centre axis (22) of the peripheral wall (21) is offset with respect to the centre axis (10) of the outlet channel (9) in the direction towards the longitudinal axis (11).

3. Connector according to claim 1 or 2, **characterised in that** the centre axis (22) of the peripheral wall (21) is offset by a maximum of 0.5 mm with respect to the centre axis (10) of the outlet channel (9).

4. Heatable fluid line (1) having a pipe (3), a connector (2) according to any one of claims 1 to 3, which is arranged at an end of the pipe (3) and which has an inlet channel (6) having a longitudinal axis (11), and a heating rod (8) which is arranged inside the pipe (3) and which protrudes laterally from the connector (2) through an outlet channel (9) at a predetermined angle (α) with respect to the longitudinal axis (11), wherein a seal (13) is arranged in a receiving space (20) which has a peripheral wall (21) between the heating rod (8) and the connector (2), wherein there are provided means which centre the heating rod (8) and the seal (13) relative to each other, **characterised in that** the peripheral wall (21) has a centre axis (22) which is laterally offset with respect to a centre axis (10) of the outlet channel (9).

5. Fluid line according to claim 4, **characterised in that** the centre axis (22) of the peripheral wall (21) is offset with respect to the centre axis (10) of the outlet channel (9) in the direction towards the longitudinal axis (11).

6. Fluid line according to claim 4 or claim 5, **characterised in that** the centre axis (22) of the peripheral wall (21) is offset by a maximum of 0.5 mm with respect to the centre axis (10) of the outlet channel (9).

7. Fluid line according to any one of claims 4 to 6, **characterised in that** in the receiving space (20) there is arranged a support plate (23) which is supported on the peripheral wall (21) and which positions the heating rod (8) relative to the seal (13).

8. Fluid line according to any one of claims 4 to 7, **characterised in that** in the inlet channel (6) there is arranged a ramp element (15) which has a guide face (16) which is directed out of the inlet channel (6) to the outlet channel (9).

## Revendications

1. Connecteur (2) pour une conduite de fluide (1) pouvant être chauffée avec un canal d'entrée (6) présentant un axe longitudinal (11), un canal de sortie (9) latéral s'étendant selon un angle (α) prédéterminé par rapport à l'axe longitudinal (11) et un espace de réception (20) pour une garniture (13) qui est contiguë au canal de sortie (9) et présente une paroi périphérique (21) avec un axe médian (22), dans lequel une garniture (13) est positionnée dans l'espace de réception (20), **caractérisé en ce que** l'axe médian (22) de la paroi périphérique (21) est décalé par rapport à l'axe médian (10) du canal de sortie (9).

2. Connecteur selon la revendication 1, **caractérisé en ce que** l'axe médian (22) de la paroi périphérique (21) est décalé par rapport à l'axe médian (10) du canal de sortie (9) vers l'axe longitudinal (11).

3. Connecteur selon la revendication 1 ou 2, **caractérisé en ce que** l'axe médian (22) de la paroi périphérique (21) est décalé de maximum 0,5 mm par rapport à l'axe médian (10) du canal de sortie (9).

4. Conduite de fluide (1) pouvant être chauffée avec un tube (3), un connecteur (2) selon l'une des revendications 1 à 3, qui est agencé à une extrémité du tube (3) et présente un canal d'entrée (6) avec un axe longitudinal (11), et une barre de chauffage (8) qui est agencée à l'intérieur du tube (3) et dépasse latéralement du connecteur (2) par un canal de sortie (9) selon un angle (a) prédéterminé par rapport à l'axe longitudinal (11), dans laquelle une garniture (13) est agencée dans un espace de réception (20) présentant une paroi périphérique (21) entre la barre de chauffage (8) et le connecteur (2), dans laquelle des moyens sont prévus, lesquels centrent la barre de chauffage (8) et la garniture (13) l'une par rapport à l'autre, **caractérisée en ce que** la paroi périphérique (21) présente un axe médian (22) qui est décalé latéralement par rapport à un axe médian (10) du canal de sortie (9).

5. Conduite de fluide selon la revendication 4, **caractérisée en ce que** l'axe médian (22) de la paroi périphérique (21) par rapport à l'axe médian (10) du canal de sortie (9) est décalé vers l'axe longitudinal (11).

6. Conduite de fluide selon la revendication 4 ou 5, **caractérisée en ce que** l'axe médian (22) de la paroi périphérique (21) est décalé de maximum 0,5 mm par rapport à l'axe médian (10) du canal de sortie (9).

7. Conduite de fluide selon l'une des revendications 4 à 6, **caractérisée en ce qu'**un disque d'appui (23) est agencé dans l'espace de réception (20), lequel s'appuie sur la paroi périphérique (21) et positionne la barre de chauffage (8) par rapport à la garniture (13).

8. Conduite de fluide selon l'une des revendications 4 à 7, **caractérisée en ce qu'**un élément de rampe (15) est agencé dans le canal d'entrée (6), lequel présente une surface de guidage (16) dirigée du canal d'entrée (6) au canal de sortie (9).
